# EUROPÄISCHE PATENTSCHRIFT

(11) **EP 3 548 371 B1**
(45) Veröffentlichungstag und Bekanntmachung des Hinweises auf die Patenterteilung: **04.08.2021**
(21) Anmeldenummer: 17805125.6
(22) Anmeldetag: 13.11.2017
(51) Int. Cl.: B62L 3/06, B62H 5/18

(54) **TRENNEINRICHTUNG, HYDRAULISCHE BREMSANLAGE, FAHRZEUG UND VERFAHREN ZUM BETREIBEN EINER BREMSANLAGE**
LOCKING DEVICE, LOCK SYSTEM, HYDRAULIC BRAKE SYSTEM, VEHICLE AND METHOD FOR LOCKING
DISPOSITIF DE VERROUILLAGE, SYSTÈME DE VERROUILLAGE, INSTALLATION DE FREINAGE HYDRAULIQUE, VÉHICULE ET PROCÉDÉ DE VERROUILLAGE

(30) Priorität: 30.11.2016 DE 102016223735
(43) Veröffentlichungstag der Anmeldung: 09.10.2019
(73) Patentinhaber: Robert Bosch GmbH, 70442 Stuttgart (DE)
(72) Erfinder: GREINER, Rinaldo, 72762 Reutlingen (DE); MERKLE, Till, 70329 Stuttgart (DE)
(86) Internationale Anmeldenummer: PCT/EP2017/079000
(87) Internationale Veröffentlichungsnummer: WO 2018/099713

(56) Entgegenhaltungen:
- CN-U- 204 341 262
- DE-A1-102013 217 754
- DE-A1-102014 211 767
- DE-U1- 29 811 255
- FR-A1- 3 013 307
- JP-A- H07 108 966
- US-A1- 2011 036 674

## Beschreibung

### Stand der Technik

Die vorliegende Erfindung betrifft eine Trenneinrichtung, eine hydraulische Bremsanlage, ein Fahrzeug und ein Verfahren zum Betreiben einer hydraulischen Bremsanlage. Die vorliegende Erfindung betrifft insbesondere eine Trenneinrichtung für eine hydraulische Bremsanlage, insbesondere für ein mit Muskelkraft und/oder mit Motorkraft antreibbares Fahrzeug, ein Fahrrad, Elektrofahrrad, eBike oder Pedelec, eine hydraulische Bremsanlage für ein mit Muskelkraft und/oder mit Motorkraft antreibbares Fahrzeug, ein Fahrrad, Elektrofahrrad, eBike oder Pedelec sowie ein Fahrrad, Elektrofahrrad, eBike, Pedelec oder dergleichen als solche.

Eine Trenneinrichtung für Zweiräder zeigt die FR 3 013 307, wobei diese Trenneinrichtung mechanisch per Schlüssel in den Trenn- beziehungsweise den normalen Bremsbetriebszustand überführt wird. Die US 2011/0036674 zeigt eine Trenneinrichtung für Bagger, wobei der Trennbetriebszustand durch eine Pumpe ausgelöst wird. FR 3 013 307 und US 2011/0036674 zeigen gattungsgemäße Trenneinrichtungen nach Anspruch 1 und gattungsgemäße Verfahren zum Betreiben einer hydraulischen Bremsanlage nach Anspruch 13.

Im Bereich von Fahrrädern, Elektrofahrrädern, eBikes, Pedelecs oder dergleichen werden vermehrt hydraulische Bremsanlagen zum Bremsen des jeweiligen Fahrzeugs eingesetzt, weil die Bremswirkung derartiger Bremsanlagen besonders zuverlässig ist.

Problematisch ist jedoch, dass der für bestimmte Funktionen notwendige dynamische Druckbereich Drücke umfasst, die mit herkömmlichen hydraulischen Bremssystemen, insbesondere im Bereich der Bremshebeleinheit, zeitlich nicht ausreichend lang und zuverlässig gehalten werden können. Dies betrifft zum Beispiel Funktionen von Bremsassistenzsystemen und den Diebstahlschutz.

### Offenbarung der Erfindung

Die erfindungsgemäße Trenneinrichtung mit den Merkmalen des Anspruchs 1 weist demgegenüber den Vorteil auf, dass auch Druckbereiche mit höheren Drücken für eine längere Zeitspanne durch Entkopplung von Schwachstellen einer Bremsanlage gehalten werden können. Dies wird erfindungsgemäß dadurch erreicht, dass eine Trenneinrichtung für eine hydraulische Bremsanlage geschaffen wird, insbesondere für ein mit Muskelkraft und/oder mit Motorkraft antreibbares Fahrzeug, Fahrrad, Elektrofahrrad, eBike, Pedelec oder dergleichen, bei welcher (i) in einem normalen Bremsbetriebszustand ein stromaufwärts und reservoirseitig gelegener Abschnitt einer Bremsleitung der Bremsanlage und ein stromabwärts und bremsseitig gelegener Abschnitt der Bremsleitung der Bremsanlage hydraulisch verbunden sind und (ii) in einem Trennbetriebszustand der stromaufwärts und reservoirseitig gelegene Abschnitt der Bremsleitung und der stromabwärts und bremsseitig gelegene Abschnitt der Bremsleitung hydraulisch voneinander getrennt sind. Ein besonders hohes Maß an Zuverlässigkeit und Betriebssicherheit der erfindungsgemäßen Trenneinrichtung stellt sich dadurch ein, dass (iii) zur gesteuerten Verbindung und Trennung ein hydraulisches Ventil mit einem Gehäuse und einem Schieberelement ausgebildet ist, (iv) wobei das Schieberelement im Gehäuse steuerbar verschiebbar ist zwischen einer dem normalen Bremsbetriebszustand entsprechenden ersten Stellung und einer dem Trennbetriebszustand entsprechenden zweiten Stellung. Das hydraulische Ventil ist eingerichtet, (v) das Schieberelement über einen in einem zugeordneten Druckspeicher herrschenden Druck gesteuert in die dem Trennbetriebszustand entsprechende zweite Stellung zu verschieben. Im Trennbetriebszustand ist durch hydraulische Entkoppelung des stromaufwärts und reservoirseitig gelegenen ersten Abschnitts der Bremsleitung dieser Bereich druckentlastet. Im stromabwärts und bremsseitig gelegenen Abschnitt der Bremsleitung kann dagegen druckerhaltend und mit Drücken gearbeitet werden, für die der stromaufwärts und reservoirseitig gelegene erste Abschnitt der Bremsleitung nicht ausgelegt ist. Auf diese Weise können mit einer entsprechend weiter gebildeten Bremsanlage auch Funktionen eines Bremsassistenzsystems und/oder eines Diebstahlschutzes realisiert werden.

Die Unteransprüche zeigen bevorzugte Weiterbildungen der Erfindung.

Das hydraulische Ventil kann zum Beispiel als Volumenstromschieber oder als Kolbenventil ausgestaltet sein.

Der normale Bremsbetriebszustand und der Trennbetriebszustand der Trenneinrichtung lassen sich auf besonders einfache Weise realisieren, wenn gemäß einer anderen Weiterbildung der erfindungsgemäßen Trenneinrichtung das Gehäuse des hydraulische Ventils eine erste, stromaufwärts und reservoirseitig gelegene Hauptöffnung und eine zweite, stromabwärts und bremsseitig gelegene Hauptöffnung aufweist, insbesondere zur hydraulischen Verbindung mit der Bremsleitung der Bremsanlage, wobei (i) in der ersten Stellung des Schieberelements die erste und die zweite Hauptöffnung des Gehäuses hydraulisch verbunden und gekoppelt sind und (ii) in der zweiten Stellung des Schieberelements die erste und die zweite Hauptöffnung des Gehäuses hydraulisch getrennt und entkoppelt sind.

Die Steuerbarkeit durch die Steuereinrichtung über den Betrieb des Volumenstromschiebers lässt sich besonders zuverlässig gestalten, wenn gemäß einer anderen vorteilhaften Weiterbildung der erfindungsgemäßen Trenneinrichtung das Gehäuse des hydraulischen Ventils eine Steueröffnung aufweist zur hydraulischen Steuerung der Stellung des Schieberelements, insbesondere über eine - mittelbare oder unmittelbare - hydraulische Verbindung oder Trennung mit bzw. von dem zugeordneten Druckspeicher, vorzugsweise mittels oder in einer Steuerleitung.

Dabei ist es von besonderem Vorteil, wenn die Trenneinrichtung mit einem ersten Steuerventil ausgebildet ist, welches zum gesteuerten hydraulischen Verbinden und Trennen der Steueröffnung des hydraulischen Ventils mit dem stromaufwärts und reservoirseitig gelegenen Abschnitt der Bremsleitung ausgebildet ist, vorzugsweise mittels einer Umgehungsleitung, welche insbesondere im stromaufwärts und reservoirseitig gelegenen Abschnitt der Bremsleitung einmündet und mit der Steueröffnung des hydraulischen Ventils hydraulisch verbunden oder verbindbar ist.

Zusätzlich oder alternativ kann eine Ausführungsform der erfindungsgemäßen Trenneinrichtung ausgebildet sein mit einem - ggf. zweiten - Steuerventil, welches eingerichtet ist zum gesteuerten hydraulischen Verbinden und Trennen der Steueröffnung des hydraulischen Ventils mit dem zugeordneten Druckspeicher, insbesondere mittels einer oder der Steuerleitung und/oder mittels einer oder der Umgehungsleitung, welche insbesondere in den stromaufwärts und reservoirseitig gelegenen Abschnitt der Bremsleitung einmündet und mit der Steueröffnung des hydraulischen Ventils hydraulisch verbunden oder verbindbar ist.

Um die Betriebssicherheit der erfindungsgemäßen Sperreinrichtung zu steigern, ist es bei einer anderen Weiterbildung vorgesehen, dass ein jeweiliges Steuerventil - also insbesondere das erste Steuerventil und/oder das zweite Steuerventil - ein im Normalzustand geschlossenes Ventil ist oder aufweist, insbesondere ein stromlos geschlossenes Magnetventil.

Gemäß einer anderen Weiterbildung der erfindungsgemäßen Trenneinrichtung ist diese mit einer Auswerte- und Steuereinheit versehen, welche zur Steuerung des Zustands der Trenneinrichtung ausgebildet ist, insbesondere über eine Steuerung des Zustands des ersten Steuerventils und/oder des zweiten Steuerventils und/oder über ein Erfassen und Auswerten von Signalen ein oder mehrerer Sensoren.

Um den Zugriff auf die erfindungsgemäße Trenneinrichtung durch eine unbefugte und nicht autorisierte Person zu vermeiden, ist es von besonderem Vorteil, wenn die Trenneinrichtung ausgebildet ist mit einer Authentifizierungseinheit, über welche - insbesondere - nur unter Verwendung eines Autorisierungsmittels ein bestehender Trennbetriebszustand der Trenneinrichtung und insbesondere eine Sperrung einer Bremse der zu Grunde liegenden Bremsanlage aufgehoben oder aufgelöst werden kann, insbesondere im Zusammenwirken mit einer oder der Auswerte- und Steuereinheit.

Dabei ist es von besonderem Vorteil, wenn die Authentifizierungseinheit und/oder das Authentifizierungsmittel realisiert werden im Zusammenhang mit einer WLAN-Einheit, einer Bluetootheinheit, einem RFID-Mittel, einem PIN-Mittel, einem Passwortschutz, einem Schutz über biometrische Merkmale oder dergleichen, insbesondere im Zusammenhang mit einer Ultraschall-, Infrarot-und/oder Funkkommunikation, vorzugsweise mittels eines Mobiltelefons.

Ferner betrifft die vorliegende Erfindung auch eine hydraulische Bremsanlage für ein mit Muskelkraft und/oder mit Motorkraft antreibbares Fahrzeug und insbesondere für ein Fahrrad, Elektrofahrrad, eBike, Pedelec oder dergleichen mit einem Reservoir für ein Bremsfluid, einer Bremse, einer Bremsleitung zur hydraulischen Verbindung des Reservoirs mit der Bremse und einer erfindungsgemäßen Trenneinrichtung, welche in der Bremsleitung integriert ist.

Gemäß einem weiteren Aspekt der vorliegenden Erfindung wird auch ein mit Muskelkraft und/oder mit Motorkraft antreibbares Fahrzeug und insbesondere ein Fahrrad, Elektrofahrrad, eBike, Pedelec oder dergleichen geschaffen mit mindestens einem Rad und einer erfindungsgemäßen hydraulischen Bremsanlage zum Bremsen und/oder Sperren des Rades.

Ferner schafft die vorliegende Erfindung auch ein Verfahren zum Betreiben einer hydraulische Bremsanlage, insbesondere für ein mit Muskelkraft und/oder mit Motorkraft antreibbares Fahrzeug, Fahrrad, Elektrofahrrad, eBike, Pedelec oder dergleichen.

Bei dem Verfahren werden in einem normalen Bremsbetriebszustand ein stromaufwärts und reservoirseitig gelegener Abschnitt einer Bremsleitung der Bremsanlage und ein stromabwärts und bremsseitig gelegener Abschnitt der Bremsleitung der Bremsanlage hydraulisch verbunden und in einem Trennbetriebszustand der stromaufwärts und reservoirseitig gelegene Abschnitt der Bremsleitung und der stromabwärts und bremsseitig gelegene Abschnitt der Bremsleitung hydraulisch voneinander getrennt.

In einem hydraulischen Ventil mit einem Gehäuse und einem Schieberelement wird das Schieberelement im Gehäuse gesteuert zwischen einer dem normalen Bremsbetriebszustand entsprechenden ersten Stellung und einer dem Trennbetriebszustand entsprechenden zweiten Stellung verschoben.

Das Schieberelement wird dabei über einen in einem zugeordneten Druckspeicher herrschenden Druck gesteuert in die dem Trennbetriebszustand entsprechende zweite Stellung verschoben.

### Kurzbeschreibung der Figuren

Unter Bezugnahme auf die beigefügten Figuren werden Ausführungsformen der Erfindung im Detail beschrieben.
- Figur 1: ist eine schematische Darstellung für ein Beispiel eines Fahrzeugs nach Art eines Elektrofahrrads, bei welchem eine erste Ausführungsform der Erfindung realisiert ist.
- Figur 2: zeigt in schematischer Darstellung nach Art eines Blockdiagramms eine Ausführungsform der erfindungsgemäßen Trenneinrichtung im Zusammenhang mit einer Ausführungsform einer hydraulischen Bremsanlage.
- Figuren 3 und 4: zeigen in Blockdiagrammen eine andere Ausführungsform der erfindungsgemäßen hydraulischen Bremsanlage mit einer Ausgestaltungsform der erfindungsgemäßen Trenneinrichtung in einem Bremsbetriebszustand bzw. in einem Trennbetriebszustand.
- Figuren 5, 6: zeigen in größerem Detail den der Sperreinrichtung aus den Figuren 3 und 4 zu Grunde liegenden Volumenstromschieber im Bremsbetriebszustand bzw. im Trennbetriebszustand der erfindungsgemäßen Trenneinrichtung.

### Bevorzugte Ausführungsformen der Erfindung

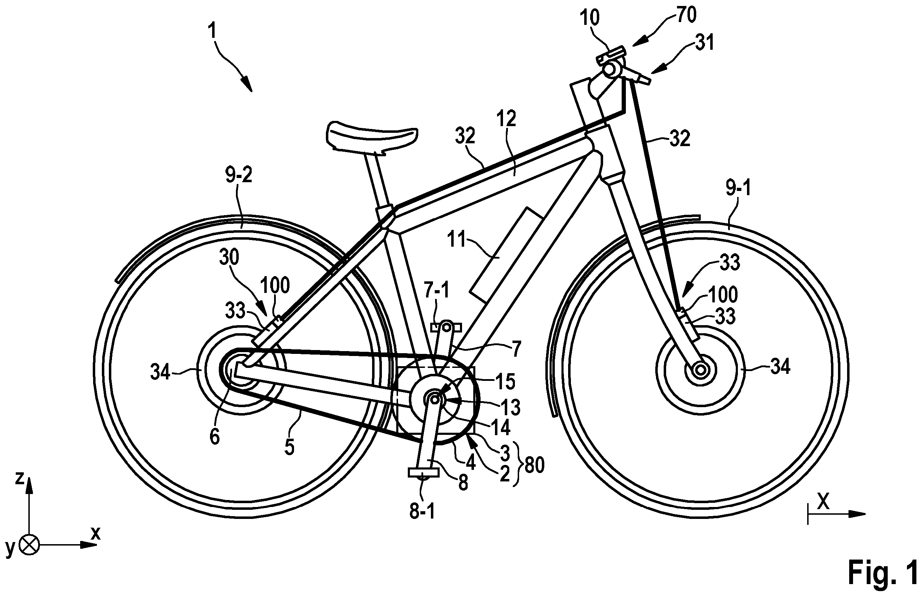

Nachfolgend werden unter Bezugnahme auf die Figuren 1 bis 6 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 sind ein Ritzel 6 und ggf. eine Gangschaltung angeordnet. Kurbeltrieb 2 und elektrischer Antrieb 3 bilden den Antrieb 80 des Fahrzeugs 1.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker 17 des Fahrzeuges 1 ist bei dieser beispielhaften Ausführungsform ferner eine Steuereinheit 10 angeordnet, welche mit dem elektrischen Antrieb 3 verbunden ist. Die Steuereinheit 10 kann auch an anderer Stelle ausgebildet sein. Im oder am Rahmen 12 ist ferner Batterie 11 ausgebildet, welche zur Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Im Bereich einer Bremsanlage 30, mittels welcher über Bremsleitungen 32 bei Betätigung des Bremshebels 31 über die Bremsen 33 ein Zugriff auf die Bremsschreiben 34 initiierbar ist, ist auch eine Ausführungsform der erfindungsgemäßen Trenneinrichtung 100 vorgesehen, entweder für eine der Bremsen 33 oder für beide Bremsen 33. In der Darstellung der Figur 1 weist die Bremsanlage 30 im Bereich jeder der Bremsen 33 jeweils eine eigene Trenneinrichtung 100 auf. Dies ist jedoch nicht zwingend.

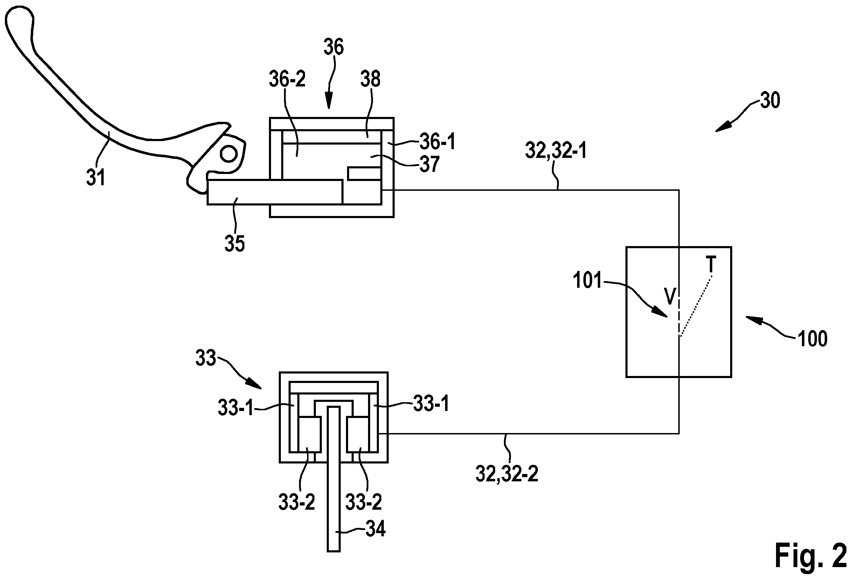

Figur 2 zeigt nach Art eines Blockdiagramms schematisch eine Ausführungsform der erfindungsgemäßen hydraulischen Bremsanlage 30, die mit einer Ausführungsform der erfindungsgemäßen Trenneinrichtung 100 ausgebildet ist.

Dem Kern nach besteht die hydraulische Bremsanlage 30 aus einer Bremsleitung 32, welche einen Betätiger aus Bremshebel 31 und Reservoir 36 für ein Bremsfluid 37 hydraulisch mit der eigentlichen Bremse 33, also in Fluidkommunikation verbindet.

Die Bremse 33 selbst besteht aus dem Bremssattel 33-1 und den Bremsbelägen 33-2, die bei Betätigung des Bremshebels 31 durch einen Benutzer auf Grund der hydraulischen Verbindung über die Bremsleitung 32 so bewegt werden, dass sie die Bremsscheibe 34 zwischen sich einschließen, dadurch Reibung auf die Bremsscheibe 34 aufbringen und damit die Bremsscheibe 34 und das mit der Bremsscheibe 34 jeweils verbundene Rad 9-1, 9-2 des Fahrzeugs 1 haltern, sperren oder gegebenenfalls abbremsen.

Zur besonders flexiblen Modulation des Bremsdrucks und/oder zur Realisierung einer Bremsassistenzfunktion und/oder einer Sperrfunktion, die auch als Abschließfunktion bezeichnet wird, ist in der Bremsleitung 32 eine Ausführungsform der erfindungsgemäßen Trenneinrichtung 100 eingebracht, so dass die Bremsleitung 32 unterteilt wird in einen ersten, reservoirseitigen und stromaufwärts gelegenen Abschnitt 32-1 und einen zweiten, bremsseitig und stromabwärts gelegenen Abschnitt 32-2.

Zur Realisierung des Bremsbetriebszustands und des Trennbetriebszustands weist die Trenneinrichtung ein Trennelement 101 auf, welches in der Figur 2 in der Stellung V den hydraulisch verbundenen Zustand in der Bremsleitung 32, also den normalen Bremsbetriebszustand realisiert und mithin die ungehinderte hydraulische Verbindung zwischen Bremse 33 und Reservoir 36, welches auch als Zylinder bezeichnet wird, gestattet.

Das Trennelement 101 ist darüber hinaus in der Lage, eine Stellung T einzunehmen, in welcher der erste Abschnitt 32-1 der Bremsleitung 32 und der zweite Abschnitt 32-2 der Bremsleitung 32 voneinander hydraulisch entkoppelt oder getrennt sind, wobei der zweite Abschnitt 32-2 druckdicht abgeschlossen werden kann, so dass der Druck im zweiten, bremsseitig und stromabwärts gelegenen Abschnitt 32-2 der Bremsleitung 32 gehalten wird, ohne dass es der Komponenten im stromaufwärts und reservoirseitig gelegenen Abschnitt 32-1 der Bremsleitung 32 bedarf. Auf diese Weise kann zum Beispiel die Bremse 33 verriegelt werden und in einem Bremszustand gesperrt verbleiben, bei welchem die Bremsklötze 33-2 die Bremsscheibe gegen Bewegung sperren. Alternativ oder zusätzlich sind in diesem Zustand unabhängig vom stromaufwärts gelegenen Abschnitt 32-1 Druckmodulationen im Sinne einer Bremsassistenz denkbar.

Zur Betätigung der Bremse 33 ist der Bremshebel 31 mit einem Kolben 35 verbunden, welcher bei Betätigung des Hebels 31 Volumen im Reservoir oder Zylinder 36 verdrängt und somit das Bremsfluid 37 aus dem im Inneren des Zylinders 36 in die Bremsleitung 32 treibt. Der dadurch entstehende Druck wird in der Bremsleitung 32 hydraulisch zur Bremse 33 hin übertragen und führt zu einer Bewegung der Bremsbeläge 33-2 auf die Bremsscheibe 34 hin.

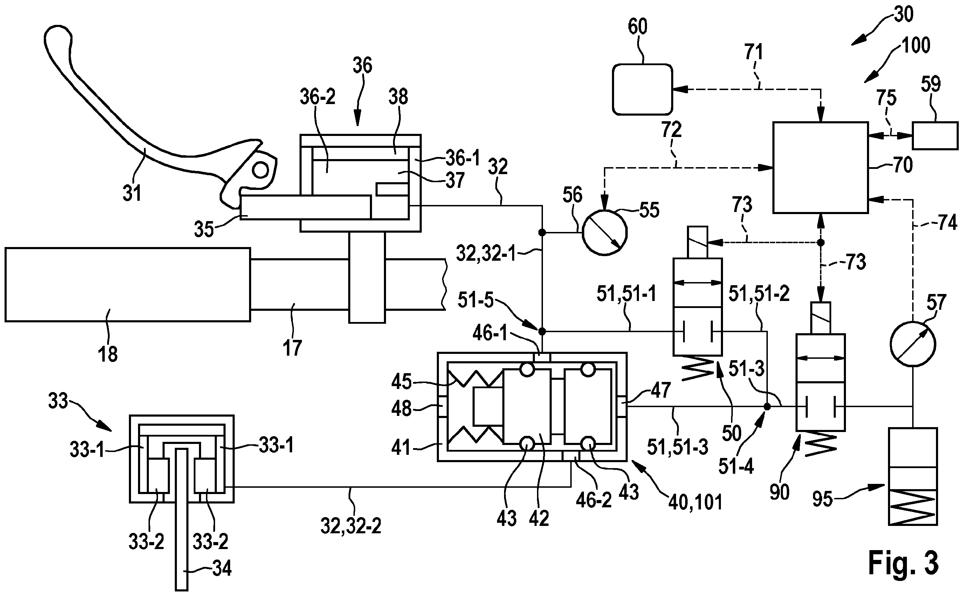

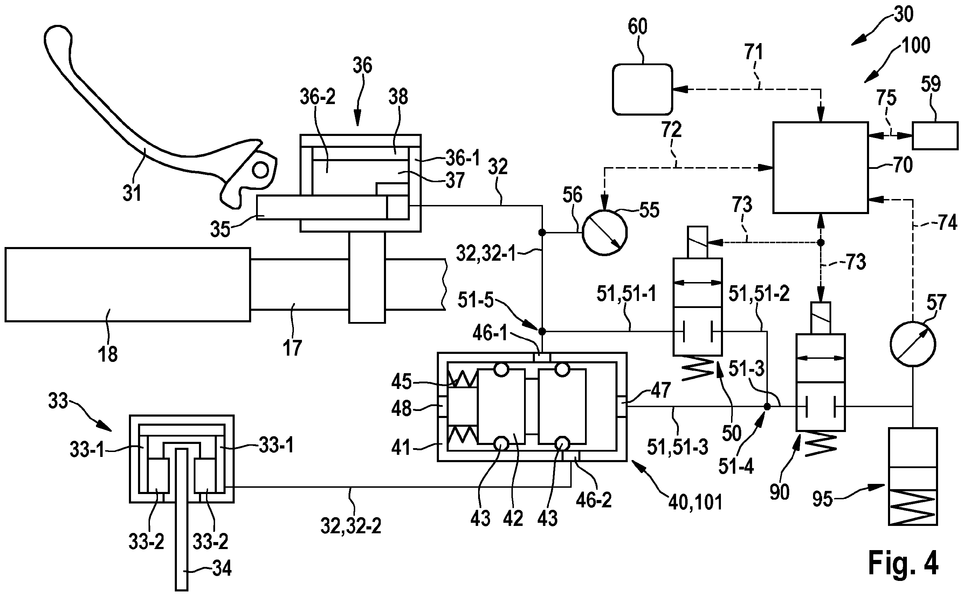

Die Figuren 3 und 4 zeigen in Form von Blockdiagrammen in einem normalen Bremsbetriebszustand bzw. in einem Trennbetriebszustand eine andere Ausführungsform der erfindungsgemäßen hydraulischen Bremsanlage 30, wobei auch Details der Ausführungsform der verwendeten erfindungsgemäßen Trenneinrichtung 100 mit einem hydraulischen Ventil 40 als Trennelement 101 dargestellt sind.

Die Bremsanlage 30 besteht aus dem Reservoir oder Zylinder 36 mit dem Bremsfluid 37 im Inneren 36-2 seines Gehäuses 36-1 unter zusätzlicher Bereitstellung eines Ausgleichsvolumens 38.

Der Zylinder 36 ist über die Bremsleitung 32 mit der eigentlichen Bremse 33 verbunden. Die Bremse 33 besteht aus dem Bremssattel 33-1 und den im Bremssattel 33-1 geführten Bremsbelägen 33-2, die geeignet sind, durch Bewegung aufeinander zu die zwischen ihnen angeordnete Bremsscheibe 34 mit Reibung zu beaufschlagen. Dies geschieht genau dann, wenn durch Betätigung des Bremshebels 31 der Kolben 35 im Reservoir 36 das Bremsfluid 37 in die Bremsleitung 32 hinein treibt, somit Druck über die Bremsleitung 32 zur Bremse 33 hin übertragen wird und eine Bewegung der Bremsklötze 33-2 auf die Bremsscheibe 34 zu erzwingt.

Der Bremshebel 31 und das Reservoir 36 sind in der Darstellung der Figuren 3 und 4 neben dem Griff 18 am Lenker 17 des zu Grunde liegenden Fahrzeugs 1 angebracht. Es sind jedoch auch andere Konstellationen denkbar, z.B. mittels eines Fußpedals betätigbare Bremsen 33 oder dergleichen.

In der Bremsleitung 32 ist eine Ausführungsform der Trenneinrichtung 100 ausgebildet, welche die Bremsleitung 32 in einen ersten, stromaufwärts und reservoirseitig gelegenen Abschnitt 32-1 und einen zweiten, stromabwärts und bremsseitig gelegenen Abschnitt 32-2 unterteilt.

Die Ausführungsform der erfindungsgemäßen Sperreinrichtung 100 gemäß den Figuren 3 und 4 weist ein hydraulisches Ventil 40 nach Art eines Volumenstromschiebers, ein erstes Steuerventil 50, ein zweites Steuerventil 90 sowie einen Druckspeicher 95 auf.

Der Volumenstromschieber 40 ist dazu ausgebildet, eine hydraulische Verbindung des Reservoirs 36 und der Bremse 33 über die Bremsleitung 32 in einem normalen Bremsbetriebszustand entweder zu ermöglichen oder in einem Trennbetriebszustand zu unterbinden, wobei das zweite Steuerventil 90 der Steuerung des Betriebs des Volumenstromschiebers 40 dient, indem entweder eine Verbindung zum Druckspeicher 95 hergestellt oder unterbunden wird. Dies geschieht, indem die Steueröffnung 47 des hydraulischen Ventils 40 zur gesteuerten Bewegung des Schieberelements 42 im Gehäuse 41 des hydraulischen Ventils 40 über die Steuerleitung 51-3 gegebenenfalls mit Druck aus dem Druckspeicher 95 beaufschlagt wird.

Zu beachten ist noch, dass das erste Steuerventil 50 in einer Umgehungsleitung oder Bypassleitung 51 ausgebildet ist. Diese Umgehungsleitung 51 mündet an einer Mündungsstelle 51-5 in die Bremsleitung 32 und insbesondere in deren stromaufwärts und reservoirseitig gelegenen ersten Abschnitt 32-1. Des Weiteren ist eine zweite Mündungsstelle 51-4 vorgesehen, an welcher die Steuerleitung 51-3 und die Umgehungsleitung 51 ineinander übergehen.

Das erste Steuerventil 50 schafft einerseits eine steuerbare hydraulische Verbindung oder Trennung des stromaufwärts und reservoirseitig gelegenen ersten Abschnitts 32-1 der Bremsleitung 32 mit der Steueröffnung 47 des hydraulischen Ventils 40 und andererseits im Zusammenwirken mit dem zweiten Steuerventil 90 eine steuerbare hydraulische Verbindung oder Trennung des stromaufwärts und reservoirseitig gelegenen ersten Abschnitts 32-1 der Bremsleitung 32 mit dem zugeordneten Druckspeicher 95. Diese steuerbare hydraulische Verbindung und Trennung kann genutzt werden, um zum Beispiel durch eine Pumpbewegung am Bremshebel 31 den Druckspeicher 95 mit Bremsfluid 37 unter Druck aufzuladen, Druck aus der Bremsleitung 32 insgesamt im Druckspeicher 95 abzufangen und/oder Druck aus der Bremse 33 im Druckspeicher 95 und/oder im Reservoir 36 aufzunehmen.

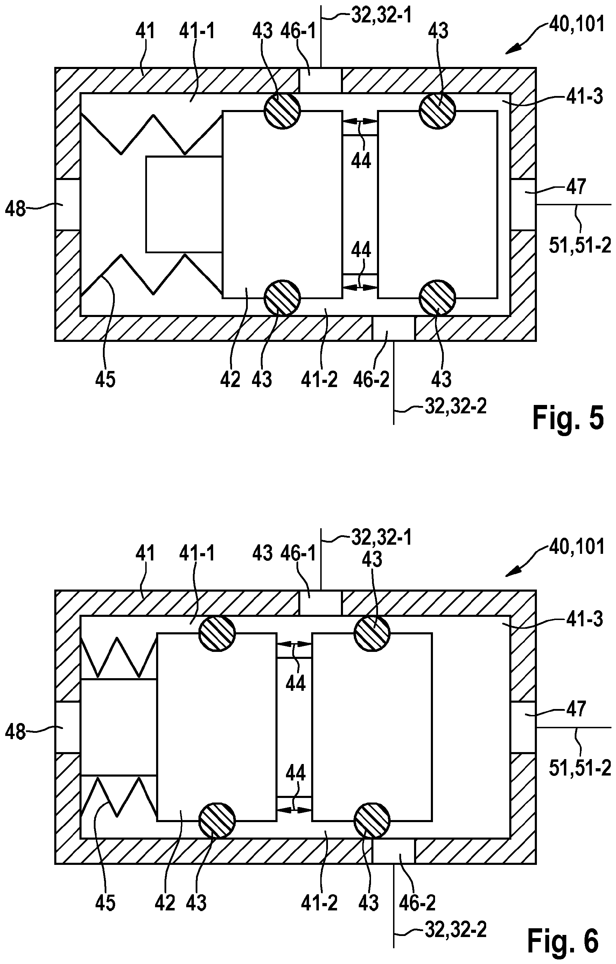

Die Figuren 5 und 6 zeigen in Form von schematischen Blockdiagrammen Details des erfindungsgemäß vorgesehenen hydraulischen Ventils 40 in Form eines Volumenstromschiebers, und zwar in den Zuständen gemäß den Figuren 3 bzw. 4.

Der Volumenstromschieber 40 weist ein Gehäuse 41 auf, in dessen Inneren ein Schieberelement 42 über Dichtungen 43 abdichtend und verschieblich gelagert ist. Das Schieberelement 42 ist über ein Rückstellelement 45 in Form einer Feder federvorgespannt, um im nichtbetätigten Zustand des Volumenstromschiebers 40 eine ungehinderte hydraulische Verbindung des Reservoirs 36 mit der Bremse 33, also eine durchgehende Fluidkommunikation in der Bremsleitung 32 zu gewährleisten.

Dazu weist das Gehäuse 41 des Volumenstromschiebers 40 eine reservoirseitige Hauptöffnung 46-1 und eine bremsseitige Hauptöffnung 46-2 auf. Über die Dichtungen 43 und die Ausgestaltung des Schieberelements 42 mit der Nut 44 besteht in der in den Figuren 3 und 5 gezeigten Stellung des Schieberelements 42 eine durchgehende Fluidkommunikation und somit eine hydraulische Verbindung in der gesamten Bremsleitung 32 vom Reservoir 36 zur Bremse 33 hin. Das bedeutet, dass das Innere des Gehäuses 41 und insbesondere das so genannte Bremskompartiment 41-2 vom Bremsfluid 37 über die Bremsleitung 32 vom Reservoir 36 zur Bremse 33 hin frei durchströmbar ist.

Der in Figur 3 dargestellte Zustand des Volumenstromschiebers 40 ist in Figur 5 noch einmal in größerem Detail gezeigt. Dort sind auch die durch das Schieberelement 42 und dessen Dichtungen 43 entstehende Aufteilung des Inneren des Gehäuses 41 in das erste oder Ausgleichskompartiment 41-1, das zweite oder Bremskompartiment 41-2 und das dritte oder Sperrkompartiment 41-3 im Detail dargestellt.

Zur Betätigung des Volumenstromschiebers 40 und insbesondere zur Bewegung des Schieberelements 42 entgegen der Federkraft des Rückstellelementes 45 ist an der rechten Stirnseite des Gehäuses 41 des Volumenstromschiebers 40 eine Steueröffnung 47 ausgebildet, über welche mittels einer Umgehungsleitung oder Bypassleitung 51 ein Steuerfluid zugeführt werden kann, welches sich im Steuerkompartiment 41-3 sammelt und das Schieberelement 42 durch Verdrängung von der in den Figuren 3 und 5 gezeigten Stellung nach links in die in den Figuren 4 und 6 gezeigte Stellung verschiebt.

Durch diese Verschiebung wird die hydraulische Verbindung in der Bremsleitung 32 unterbrochen, indem die freie Kommunikation zwischen den ersten und zweiten Hauptöffnungen 46-1 und 46-2 unterbrochen wird. Dies ist im Detail in Figur 6 gezeigt.

Mit der Bewegung des Schieberelements 42 findet ein Übergang vom normalen Bremsbetrieb zum Trennbetrieb statt.

In der Darstellung gemäß den Figuren 3 bis 6 ist die der Steueröffnung 47 des Gehäuses 41 des Volumenstromschiebers 40 geführte Leitung 51 eine Umgehungsleitung oder Bypassleitung 51, die mit der Steuerleitung 51-3 abschnittsweise zusammen verläuft und aus dem Druckspeicher 95 mit dem Bremsfluid 37 beaufschlagt wird oder Druck in den Druckspeicher 95 abgeben kann.

Diese Beaufschlagung mit dem Bremsfluid 37 aus dem Druckspeicher 95 erfolgt jedoch nur bei Aktivierung des zweiten Steuerventils 90, d.h. insbesondere in dessen bestromten Fall. Im unbestromten Fall - und somit inhärent sicher - ist das zweite Steuerventil geschlossen und es erfolgt keine Beeinflussung des Volumenstromschiebers 40 und seines Schieberelements 42, welches dann in der in den Figuren 3 und 5 gezeigten Stellung verbleibt. Nur im bestromten Fall wird gemäß den Figuren 4 und 6 das Schieberelement 42 in die Trennbetriebsstellung geschoben, so dass die Bremsleitung 32 hydraulisch unterbrochen wird und z.B. unter Beibehaltung des Bremsdrucks im zweiten, stromabwärts und bremsseitig gelegenen Abschnitts 32-2 die Bremswirkung der Bremsklötze 33-2 auf die Bremsscheibe 34 zur Sperrung der Bremsscheibe 34 aufrecht erhalten wird.

Die Steuerung der Trennreinrichtung 100 und der Bremsanlage 30 gemäß den Figuren 3 bis 6 kann unter Verwendung einer Auswerte- und Steuereinheit 70 erfolgen. Diese ist in der Darstellung gemäß den Figuren 3 und 4 über Steuer-und Messleitungen 71, 72, 73, 74 und 75 mit einer Authentifizierungseinheit 60, Druckmesssensoren 55,57, dem weiteren Sensor 59 und den Steuerventilen 50 und 90 verbunden.

Die Auswerte- und Steuereinheit 70 kann zum Beispiel dazu ausgebildet sein, die Steuerventile 50 und/oder 90 nur dann zu betätigen, also z.B. unter Beaufschlagung mit elektrischem Strom zu öffnen, wenn durch die Sensoren 55, 57, 59 bestimmte Drücke oder andere Betriebsparameter beim Betrieb des Fahrzeugs 1 und/oder der Bremsanlage 30 vorliegen.

Auf der anderen Seite ist ein erneutes Betätigen der Steuerventile 50 und/oder 90 zum Entsperren durch Aufheben des Trennbetriebszustands und somit ein Übergang in dem normalen Bremsbetriebszustand zum Beispiel nur dann durchzuführen, wenn über die Authentifizierungseinheit 60 eine entsprechende Authentifizierung und Verifizierung der Berechtigung zum Aufheben des Trennbetriebszustands erfolgt. Sobald ein Nutzer über die Authentifizierungseinheit 60 seine Berechtigung zum Aufheben des Trennbetriebszustands gegeben hat, wird dies über die Steuer- und Messleitung 71 der Auswerte- und Sperrsteuereinheit 70 als Signal mitgeteilt, welche nach Auswertung über die Steuer- und Messleitung 73 das Steuerventil 50 und/oder das Steuerventil 90 bestromt und dadurch einen Rückfluss des Bremsfluids 37 aus dem dritten oder Sperrkompartiment 41-3 des Gehäuses 41 des Volumenstromschiebers 40 über die Bypassleitung 51 in das Reservoir 36 und/oder über die Steuerleitung 51-5 in den Druckspeicher 95 zurück ermöglicht.

Als Folge davon nimmt das Schieberelement 42 unter Wirkung der Rückstellkraft des Rückstellelements 45 die in den Figuren 3 und 5 gezeigte Position ein, so dass die Bremsanlage 30 in den normalen Bremsbetriebszustand zurückkehrt.

Dabei wird von den Bremsbelägen 33-2 der Bremse 33 die Bremscheibe 34 freigegeben, das entsprechende Rad 9-1, 9-2 kann wieder frei gedreht werden.

Die Figuren 5 und 6 zeigen in größerem Detail die in den Figuren 3 und 4 schematisch angedeuteten Betriebszustände des Volumenstromschiebers 40, wobei der in Figur 5 dargestellte Betriebszustand dem normalen Bremsbetriebszustand der Bremsanlage 30 entspricht, der in Figur 6 gezeigte Zustand des Volumenstromschiebers 40 entspricht dagegen dem Trennbetriebszustand der zu Grunde liegenden Bremsanlage 30.

In den Figuren 3 bis 6 ist noch eine der Steueröffnung 47 gegenüberliegende Ausgleichsöffnung 48 dargestellt, welche den Druckausgleich im ersten oder Ausgleichskompartiment 41-1 des Gehäuses 41 des Volumenstromschiebers 40 erlaubt und somit die Beweglichkeit des Schieberelements 42 im Inneren des Gehäuses 41 verbessert.

Diese und weitere Merkmale und Eigenschaften der vorliegenden Erfindung werden an Hand der folgenden Darlegungen weiter erläutert:
Viele Fahrräder 1 besitzen heutzutage hydraulische Bremsanlagen 30 in Form von Scheibenbremsen 33, nämlich mit einem Bremssattel 33-1, Bremsbelägen 33-2 und einer Bremsscheibe 34, da diese Art Bremsen über ein gutes Bremsverhalten verfügen
Prinzipiell ist es mit einer Regelungseinrichtung möglich, den Druck in dem entsprechenden hydraulischen System und insbesondere in der Bremsleitung 32 aktiv zu erniedrigen oder zu erhöhen, um den Fahrkomfort und die Fahrsicherheit für den Fahrer zu steigern.

Eine Druckerniedrigung kann zum Beispiel dazu verwendet werden, ein Übersteigen über den Lenker 17, sowie ein Blockierendes Rad 9-1, 9-2 während einer Gefahrensituation, zu verhindern.

Mit einer Druckerhöhung können beispielsweise ein Bremsassistent, der aktiv ein Rad 9-1, 9-2 anbremst, sowie ein Diebstahlschutz durch Blockieren der Räder 9-1, 9-2 verwirklicht werden.

Solch eine aktive Druckregulierung ist allerdings aus folgenden Gründen begrenzt.

Die Dichtungen der Bremshebeleinheit 31, 36 und im Speziellen die Dichtungen des Bremsflüssigkeitsreservoirs 36 begrenzen dabei den maximalen Druck, da diese Komponenten für hohe Drücke nicht explizit ausgelegt sind.

Gleichzeitig wird für eine aktive Druckregulierung ein relativ großes hydraulisches Volumen benötigt, da die Luft im Ausgleichsvolumen 38, das sich oberhalb der Dichtung im Bremsflüssigkeitsreservoir 36 befindet, erst verdrängt werden muss, bevor sich ein Druck im Bremssystem und insbesondere in der Bremsleitung 32 aufbauen kann.

Aus Sicherheitsgründen werden bisher NOVs oder Normally-Open-Ventile verbaut, die diese Trennung herbeiführen, also Ventile, die im normalen Zustand oder stromlosen Zustand offen sind und eine hydraulische Verbindung bewirken und für eine Trennung bestromt werden müssen.

Der Nachteil an diesen Ventilen in Form von NO-Magnetventilen ist der hohe Stromverbrauch, der sich bei einer langfristigen Trennung ergibt.

Es ist eine Aufgabe der vorliegenden Erfindung, bei einer hydraulischen Bremsanlage 30 die Bremshebeleinheit 31, 36, mit samt dem Bremsflüssigkeitsreservoir 36, von der eigentlichen Bremse 33 und insbesondere vom Bremssattel 33-1 hydraulisch zu trennen, wie dies in den Figuren 3 und 4 im Detail dargestellt ist.

Dazu wird erfindungsgemäß eine Kombination aus einem (i) hydraulischen Ventil 40, insbesondere nach Art eines Volumenstrom Schiebers oder eines Kolbenventils, (ii) zwei Steuerventilen 50, 90 und (iii) einem Druckspeicher 95 eingesetzt.

Es wird ein Überdruck an ein Schieberelement 42 angelegt, welches auch als Kolben bezeichnet wird und welches dadurch im Gehäuse 41 linear verschoben wird, nämlich von einer rechten Position in Figur 3 zu einer linken Position in Figur 4 im Gehäuse 41. Somit wird durch Unterbrechung der eigentlichen Bremsleitung 32 die Bremshebeleinheit 31, 36 von der eigentlichen Bremse 33 hydraulisch trennt.

Durch diese hydraulische Trennung ist eine bessere Druckregulierung direkt am Bremssattel 33-1 der Bremse 33 möglich.

Gleichzeitig werden die Komponenten der Bremshebeleinheit 31, 36 vom Druck her nicht mitbelastet.

Durch die Trennung zur Bremshebeleinheit 31, 36 wird für eine Druckerhöhung am Bremssattel 33-1 deutlich weniger hydraulisches Volumen benötigt, da die Luftverdrängung im Bremsflüssigkeitsreservoir 38 komplett wegfällt.

Gemäß einem Aspekt der vorliegenden Erfindung wird ein hydraulisches System im Sinne einer hydraulischen Bremssteuereinrichtung 100 geschaffen, welches in den Bremskreis einer hydraulischen Bremsanlage 30 und insbesondere in deren Bremsleitung 32 integriert wird.

Figur 3 zeigt den Grundzustand einer Ausführungsform der erfindungsgemäßen hydraulischen Bremsanlage 30 unter Verwendung eines derartigen Systems.

Eine Auswerte- und Steuereinheit 70, die auch als Controller bezeichnet wird, wertet unterschiedliche Sensorsignale aus und regelt entsprechend die Öffnungszeiten der beiden NC-Magnetventile 50 und 90.

Wird das hydraulische Ventil 40 mit Druck beaufschlagt, verschiebt sich Kolben 42, der zur Trennung der Bremsleitung 32 des Bremskreises führt, von der rechten Position im Gehäuse 41 gemäß Figur 3 zur linken Position im Gehäuse 41 gemäß Figur 4. In Figur 4 ist also dieser getrennte Zustand dargestellt.

Solange der Steuerdruck am hydraulischen Ventil 40 anliegt, verharrt der Kolben 42 in dieser Position auf der linken Seite des Gehäuses 41 gemäß Figur 4.

Die Regelung des Druckes am Bremssattel 33-1 kann in diesem Zustand der Trennung über die beiden Steuerventile 50 und 90 erfolgen.

Nimmt der Steuerdruck ab, wird der Kolben 42 durch eine Rückstellfeder 45 wieder in die Grundstellung zurück gedrückt, d.h. auf die rechte Seite im Gehäuse 41 gemäß dem in Figur 3 dargestellten Zustand. Die Bremsanlage 30 funktioniert anschließend wieder in der herkömmlichen Form als Hydraulikbremse.

Ein Vorteil der Erfindung liegt darin, dass elektrische Energie nur für die lineare Verschiebung des Kolbens 42 sowie für die Druckregelung durch die beiden Steuerventile 50 und 90 benötigt wird. Werden die Steuerventile 50 und 90 geschlossen, verharrt der Kolben 42 in der Position, in der er zuvor war. Mit diesem System ist somit neben einem Bremsassistenten, der während einer Bremsung den Bremsdruck reguliert, das Blockieren der Räder 9-1, 9-2 im Stillstand über einen bestimmten Zeitraum als zusätzlichen Schutz vor Diebstahl, umsetzbar.

Das hier vorgestellte System kann unter anderem folgende zwei Funktionen erfüllen, nämlich
(1) eine bessere Druckregelung am Bremssattel 33-1 während der Fahrt durch hydraulische Trennung zur Bremshebeleinheit 31, 36 und
(2) ein Blockieren der Räder 9-1, 9-2 über bestimmten Zeitraum, und zwar ohne Energie zu verlieren.

Während der Fahrt erhält der Controller 70 permanent Informationen der Sensoren - zum Beispiel der Drucksensoren 55 und 57 oder weiterer Sensoren zur Beschreibung des Betriebszustands des zu Grunde liegenden Fahrzeugs 1 - über die aktuelle Fahrsituation. Detektieren die Sensoren eine gefährliche Bremssituation, öffnet der Controller 70 das zweite Steuerventil 90 als im Normalzustand geschlossenes Ventil (NCV). Dadurch wird der Ventilkolben 42 des hydraulischen Ventils 40, wie in Figur 4 zu sehen ist, im Gehäuse 41 auf die linke Seite verschoben. Dadurch wird die Bremsleitung 32 hydraulisch unterbrochen und die Bremshebeleinheit 30, 36 hydraulisch von der eigentlichen Bremse 33 insbesondere vom Bremssattel 33-1 abgetrennt. Sobald der Bremssattel 33-1 mit dem Druckspeicher 95 hydraulisch verbunden ist, gleichen sich die beiden Drücke an. Der Bremsdruck im Bremssattel 33-1 sinkt somit. Durch die Abnahme des Bremsdrucks werden ein übermäßiges Bremsen und somit ein Überschlag über den Lenker oder ein Blockieren eines Rades 9-1, 9-2 verhindert.

Durch Öffnen des ersten Steuerventils 50 kann der Bremsdruck wieder erhöht werden, solange ein höherer Druck am Bremshebel 31 anliegt.

Durch dieses Wechselspiel zwischen Druckaufbau und Druckabbau am Bremssattel 30-1 ist es möglich, die Bremsdrücke und somit die Bremskraftverteilung an die aktuelle Bremssituation anzupassen, um eine möglichst sichere Bremsung zu gewährleisten.

Wird das Fahrrad 1 abgestellt, können beide Räder 9-1, 9-2 entweder über einen Tastendruck oder automatisch blockiert werden, um ein ungewolltes Wegschieben des Fahrrades 1 zu verhindern.

Dabei öffnet der Controller 70 das zweite Steuerventil 90. Dies führt wieder zu einer Verschiebung des Ventilkolbens 42 im Gehäuse 41 und dort auf die linke Seite, wie dies in Figur 4 zu sehen ist.

Durch diese Verschiebung wird die Bremshebeleinheit 31, 36 hydraulisch wieder von der eigentlichen Bremse 33 und vom Bremssattel dran 30-1 abgetrennt.

Der Druck aus dem Druckspeicher 95 sorgt anschließend beim Verbinden für einen Druckanstieg am Bremssattel 33-1. Dies führt zum Blockieren und mithin zum Sperren der Räder 9-1, 9-2.

Wird das zweite Steuerventil 90 wieder geschlossen, so bleibt der Druck am Bremssattel 3-1 erhalten, ohne dass dazu zusätzliche Energie benötigt wird.

Um Blockade der Räder 9-1, 9-2 wieder aufzuheben, wird das erste Steuerventil 50 vom Controller 70 geöffnet.

Das Druckgefälle in Richtung des Bremshebels 31 führt zur Abnahme des Drucks am Bremssattel 33-1.

Reicht dieser Druckabfall nicht aus, so muss auch das zweite Steuerventil 90 geöffnet und durch Pumpen am Bremshebel 31 der Druckspeicher 95 geladen werden. Dies führt im Bremskreis und insbesondere der Bremsleitung 32 zu einer Druckabnahme im Bremsfluid 37.

Ist die Druckabnahme groß genug, so wird der Ventilkolben 42 durch die Rückstellfeder 48 im Gehäuse 41 in die Ausgangsposition auf der rechten Seite im Gehäuse 41 gemäß Figur 3 gedrückt.

Der Bremskreis und die Bremsleitung 32 sind somit wieder hydraulisch verbunden und die Bremse 33 ist voll funktionsfähig.

## Patentansprüche

1. Trenneinrichtung (100) für eine hydraulische Bremsanlage (30), insbesondere für ein mit Muskelkraft und/oder mit Motorkraft antreibbares Fahrzeug (1), Fahrrad, Elektrofahrrad, eBike oder Pedelec,
bei welcher:
- in einem normalen Bremsbetriebszustand ein stromaufwärts und reservoirseitig gelegener Abschnitt (32-1) einer Bremsleitung (32) der Bremsanlage (30) und ein stromabwärts und bremsseitig gelegener Abschnitt (32-2) der Bremsleitung (32) der Bremsanlage (30) hydraulisch verbunden sind,
- in einem Trennbetriebszustand der stromaufwärts und reservoirseitig gelegene Abschnitt (32-1) der Bremsleitung (32) und der stromabwärts und bremsseitig gelegene Abschnitt (32-2) der Bremsleitung (32) hydraulisch voneinander getrennt sind,
- zur gesteuerten hydraulischen Verbindung und Trennung ein hydraulisches Ventil (40) mit einem Gehäuse (41) und einem Schieberelement (42) ausgebildet ist,
- das Schieberelement (42) im Gehäuse (41) verschiebbar ist zwischen einer dem normalen Bremsbetriebszustand entsprechenden ersten Stellung und einer dem Trennbetriebszustand entsprechenden zweiten Stellung,
**dadurch gekennzeichnet, dass**
- das hydraulische Ventil (40) eingerichtet ist, das Schieberelement (42) über einen in einem zugeordneten Druckspeicher (95) herrschenden Druck gesteuert in die dem Trennbetriebszustand entsprechende zweite Stellung zu verschieben.

2. Trenneinrichtung (100) nach Anspruch 1,
bei welcher das hydraulische Ventil (40) als Volumenstromschieber oder als Kolbenventil ausgebildet ist.

3. Trenneinrichtung (100) nach einem der vorangehenden Ansprüche,
- bei welcher das Gehäuse (41) des hydraulischen Ventils (40) eine erste, stromaufwärts und reservoirseitig gelegene Hauptöffnung (46-1) und eine zweite, stromabwärts und bremsseitig gelegene Hauptöffnung (46-2) aufweist, insbesondere zur hydraulischen Verbindung mit der Bremsleitung (32) der Bremsanlage (30),
- bei welcher in der ersten Stellung des Schieberelements (42) die erste und die zweite Hauptöffnung (46-1, 46-2) des Gehäuses (41) hydraulisch verbunden und gekoppelt sind und
- bei welcher in der zweiten Stellung des Schieberelements (42) die erste und die zweite Hauptöffnung (46-1, 46-2) des Gehäuses (41) hydraulisch getrennt und entkoppelt sind.

4. Trenneinrichtung (100) nach einem der vorangehenden Ansprüche, bei welcher das Gehäuse (41) des hydraulischen Ventils (40) eine Steueröffnung (47) aufweist zur hydraulischen Steuerung der Stellung des Schieberelements (42), insbesondere über eine - mittelbare oder unmittelbare - hydraulische Verbindung oder Trennung mit bzw. von dem zugeordneten Druckspeicher (95), vorzugsweise mittels einer Steuerleitung (51-3).

5. Trenneinrichtung (100) nach Anspruch 4,
mit einem ersten Steuerventil (50), welches zum gesteuerten hydraulischen Verbinden und Trennen der Steueröffnung (47) des hydraulischen Ventils (40) mit dem stromaufwärts und reservoirseitig gelegenen Abschnitt (32-1) der Bremsleitung (32) ausgebildet ist, vorzugsweise mittels einer Umgehungsleitung (51), welche insbesondere im stromaufwärts und reservoirseitig gelegenen Abschnitt (32-1) der Bremsleitung (32) einmündet und mit der Steueröffnung (42) des hydraulischen Ventils (40) hydraulisch verbunden oder verbindbar ist.

6. Trenneinrichtung (100) nach Anspruch 4 oder 5,
mit einem zweiten Steuerventil (90), welches zum gesteuerten hydraulischen Verbinden und Trennen der Steueröffnung (47) des hydraulischen Ventils (40) mit dem zugeordneten Druckspeicher (95) ausgebildet ist, insbesondere mittels einer oder der Steuerleitung (51-3) und/oder mittels einer oder der Umgehungsleitung (51), welche insbesondere in den stromaufwärts und reservoirseitig gelegenen Abschnitt (32-1) der Bremsleitung (32) einmündet und mit der Steueröffnung (42) des hydraulischen Ventils (40) hydraulisch verbunden oder verbindbar ist.

7. Trenneinrichtung (100) nach Anspruch 5 oder 6,
bei welchem ein jeweiliges Steuerventil (50, 90) ein im Normalzustand geschlossenes Ventil ist, insbesondere ein stromlos geschlossenes Magnetventil.

8. Trenneinrichtung (100) nach einem der vorangehenden Ansprüche, mit einer Auswerte- und Steuereinheit (70), welche zur Steuerung des Zustands der Sperreinrichtung (100) ausgebildet ist, insbesondere über eine Steuerung des Zustands des ersten Steuerventils (50) und/oder des zweiten Steuerventils (90) und/oder über ein Erfassen und Auswerten von Signalen ein oder mehrerer Sensoren (55, 57, 59).

9. Trenneinrichtung (100) nach einem der vorangehenden Ansprüche, welche eine Authentifizierungseinheit (60) aufweist, über welche nur unter Verwendung eines Autorisierungsmittels ein bestehender Trennbetriebszustand der Sperreinrichtung (100) und insbesondere eine Sperrung der Bremsanlage (30) aufhebbar ist, insbesondere im Zusammenwirken mit einer oder der Auswerte- und Steuereinheit (70).

10. Trenneinrichtung (100) nach Anspruch 9,
bei welcher die Authentifizierungseinheit (60) und/oder das Authentifizierungsmittel realisiert sind im Zusammenhang mit einer WLAN-Einheit, einer Bluetootheinheit, einem RFID-Mittel, einem PIN-Mittel, einem Passwortschutz, einem Schutz über biometrische Merkmale oder dergleichen, insbesondere im Zusammenhang mit einer Ultraschall-, Infrarot- und/oder Funkkommunikation, vorzugsweise mittels eines Mobiltelefons.

11. Hydraulische Bremsanlage (30) für ein mit Muskelkraft und/oder mit Motorkraft antreibbares Fahrzeug (1), ein Fahrrad, Elektrofahrrad, eBike oder Pedelec,
mit:
- einem Reservoir (36) für ein Bremsfluid (37),
- einer Bremse (33),
- einer Bremsleitung (32) zur hydraulischen Verbindung des Reservoirs (36) mit der Bremse (33) und
- einer Trenneinrichtung (100) nach einem der Ansprüche 1 bis 10, welche in der Bremsleitung (32) integriert ist.

12. Mit Muskelkraft und/oder mit Motorkraft antreibbares Fahrzeug (1) und insbesondere Fahrrad, Elektrofahrrad, eBike oder Pedelec,
mit:
- mindestens einem Rad (9-1, 9-2) und
- einer Bremsanlage (30) nach Anspruch 11 zum Bremsen und/oder Sperren des mindestens einen Rades (9-1, 9-2).

13. Verfahren zum Betreiben einer hydraulische Bremsanlage (30), insbesondere für ein mit Muskelkraft und/oder mit Motorkraft antreibbares Fahrzeug (1), Fahrrad, Elektrofahrrad, eBike oder Pedelec,
bei welchem:
- in einem normalen Bremsbetriebszustand ein stromaufwärts und reservoirseitig gelegener Abschnitt (32-1) einer Bremsleitung (32) der Bremsanlage (30) und ein stromabwärts und bremsseitig gelegener Abschnitt (32-2) der Bremsleitung (32) der Bremsanlage (30) hydraulisch verbunden werden,
- in einem Trennbetriebszustand der stromaufwärts und reservoirseitig gelegene Abschnitt (32-1) der Bremsleitung (32) und der stromabwärts und bremsseitig gelegene Abschnitt (32-2) der Bremsleitung (32) hydraulisch voneinander getrennt werden,
- zum gesteuerten hydraulischen Verbinden und Trennen in einem hydraulischen Ventil (40) mit einem Gehäuse (41) und einem Schieberelement (42) das Schieberelement (42) im Gehäuse (41) gesteuert zwischen einer dem normalen Bremsbetriebszustand entsprechenden ersten Stellung und einer dem Trennbetriebszustand entsprechenden zweiten Stellung verschoben wird,
**dadurch gekennzeichnet, dass**
- das Schieberelement (42) über einen in einem zugeordneten Druckspeicher (95) herrschenden Druck gesteuert in die dem Trennbetriebszustand entsprechende zweite Stellung verschoben wird.

## Claims

1. Disconnecting device (100) for a hydraulic brake system (30),
in particular for a vehicle (1), bicycle, electric bicycle, e-bike or pedelec which can be driven by way of muscle power and/or by way of motor power,
in the case of which disconnecting device (100):
- in a normal brake operating state, a section (32-1), which lies upstream and in the reservoir side, of a brake line (32) of the brake system (30) and a section (32-2), which lies downstream and on the brake side, of the brake line (32) of the brake system (30) are connected hydraulically,
- in a disconnected operating state, that section (32-1) of the brake line (32) which lies upstream and on the reservoir side and that section (32-2) of the brake line (32) which lies downstream and on the brake side are disconnected hydraulically from one another,
- a hydraulic valve (40) with a housing (41) and a slide element (42) is configured for the controlled hydraulic connection and disconnection,
- the slide element (42) can be displaced in the housing (41) between a first position which corresponds to the normal brake operating state and a second position which corresponds to the disconnected operating state,
**characterized in that**
- the hydraulic valve (40) is set up to displace the slide element (42) into the second position which corresponds to the disconnected operating state in a manner which is controlled via a pressure which prevails in an associated pressure accumulator (95) .

2. Disconnecting device (100) according to Claim 1, in the case of which the hydraulic valve (40) is configured as a volumetric flow slide or as a piston valve.

3. Disconnecting device (100) according to either of the preceding claims,
- in the case of which the housing (41) of the hydraulic valve (40) has a first main opening (46-1) which lies upstream and on the reservoir side and a second main opening (46-2) which lies downstream and on the brake side, in particular for the hydraulic connection to the brake line (32) of the brake system (30),
- in the case of which, in the first position of the slide element (42), the first and the second main opening (46-1, 46-2) of the housing (41) are connected and coupled hydraulically, and
- in the case of which, in the second position of the slide element (42), the first and the second main opening (46-1, 46-2) of the housing (41) are disconnected and decoupled hydraulically.

4. Disconnecting device (100) according to one of the preceding claims,
in the case of which the housing (41) of the hydraulic valve (40) has a control opening (47) for the hydraulic control of the position of the slide element (42), in particular via a (indirect or direct) hydraulic connection or disconnection to or from the associated pressure accumulator (95), preferably by means of a control line (51-3).

5. Disconnecting device (100) according to Claim 4, with a first control valve (50) which is configured for the controlled hydraulic connection and disconnection of the control opening (47) of the hydraulic valve (40) to/from that section (32-1) of the brake line (32) which lies upstream and on the reservoir side, preferably by means of a bypass line (51) which opens, in particular, in that section (32-1) of the brake line (32) which lies upstream and on the reservoir side, and is connected or can be connected hydraulically to the control opening (42) of the hydraulic valve (40).

6. Disconnecting device (100) according to Claim 4 or 5,
with a second control valve (90) which is configured for the controlled hydraulic connection and disconnection of the control opening (47) of the hydraulic valve (40) to/from the associated pressure accumulator (95), in particular by means of a or the control line (51-3) and/or by means of a or the bypass line (51) which opens, in particular, into that section (32-1) of the brake line (32) which lies upstream and on the reservoir side, and is connected or can be connected hydraulically to the control opening (42) of the hydraulic valve (40).

7. Disconnecting device (100) according to Claim 5 or 6,
in the case of which a respective control valve (50, 90) is a valve which is closed in the normal state, in particular a normally closed solenoid valve.

8. Disconnecting device (100) according to one of the preceding claims,
with an evaluation and control unit (70) which is configured for controlling the state of the blocking device (100), in particular via a control operation of the state of the first control valve (50) and/or the second control valve (90) and/or via a detection and evaluation of signals of one or more sensors (55, 57, 59) .

9. Disconnecting device (100) according to one of the preceding claims
which has an authentication unit (60), via which an existing disconnected operating state of the blocking device (100) and, in particular, blocking of the brake system (30) can be cancelled only with the use of an authorization means, in particular in interaction with a or the evaluation and control unit (70).

10. Disconnecting device (100) according to Claim 9, in the case of which the authentication unit (60) and/or the authentication means are/is realised in conjunction with a WLAN unit, a Bluetooth unit, an RFID means, a PIN means, a password protection means, a protection means via biometric features or the like, in particular in conjunction with an ultrasonic, infrared and/or radio communication, preferably by means of a mobile telephone.

11. Hydraulic brake system (30) for a vehicle (1) which can be driven by way of muscle power and/or by way of motor power, a bicycle, electric bicycle, e-bike or pedelec,
with:
- a reservoir (36) for a brake fluid (37),
- a brake (33),
- a brake line (32) for the hydraulic connection of the reservoir (36) to the brake (33), and
- a disconnecting device (100) according to one of Claims 1 to 10 which is integrated into the brake line (32) .

12. Vehicle (1) which can be driven by way of muscle power and/or by way of motor power, and in particular a bicycle, electric bicycle, e-bike or pedelec,
with:
- at least one wheel (9-1, 9-2), and
- a brake system (30) according to Claim 11 for breaking and/or locking of the at least one wheel (9-1, 9-2).

13. Method for operating a hydraulic brake system (30), in particular for a vehicle (1), bicycle, electric bicycle, e-bike or pedelec which can be driven by way of muscle power and/or by way of motor power,
in the case of which method:
- in the normal operating state, a section (32-1), which lies upstream and on the reservoir side, of a brake line (32) of the brake system (30) and a section (32-2), which lies downstream and on the brake side, of the brake line (32) of the brake system (30) are connected hydraulically,
- in a disconnected operating state, that section (32-1) of the brake line (32) which lies upstream and on the reservoir side and that section (32-2) of the brake line (32) which lies downstream and on the brake side are disconnected hydraulically from one another,
- for the controlled hydraulic connection and disconnection in a hydraulic valve (40) with a housing (41) and a slide element (42), the slide element (42) is displaced in the housing (41) in a controlled manner between a first position which corresponds to the normal brake operating state and a second position which corresponds to the disconnected operating state,
**characterized in that**
- the slide element (42) is displaced into the second position which corresponds to the disconnected operating state in a manner which is controlled via a pressure which prevails in an associated pressure accumulator (95).

## Revendications

1. Dispositif de séparation (100) pour un système de freinage hydraulique (30), notamment pour un véhicule (1) pouvant être propulsé par la force musculaire et/ou la force d'un moteur, une bicyclette, un vélo électrique, un eBike ou un vélo à assistance électrique,
avec lequel :
- dans un état opérationnel de freinage normal, une portion (32-1), qui se trouve en amont et côté réservoir, d'une conduite de frein (32) du système de freinage (30) et une portion (32-2), qui se trouve en aval et côté frein, de la conduite de frein (32) du système de freinage (30) sont reliées hydrauliquement,
- dans un état opérationnel de séparation, la portion (32-1), qui se trouve en amont et côté réservoir, de la conduite de frein (32) et la portion (32-2) qui se trouve en aval et côté frein de la conduite de frein (32) sont séparées hydrauliquement l'une de l'autre,
- une vanne hydraulique (40) est configurée avec un boîtier (41) et un élément curseur (42) en vue de la liaison et de la séparation hydrauliques commandées,
- l'élément curseur (42) est coulissant dans le boîtier (41) entre une première position qui correspond à l'état opérationnel de freinage normal et une deuxième position qui correspond à l'état opérationnel de séparation,
**caractérisé en ce que**
- la vanne hydraulique (40) est conçue pour faire coulisser l'élément curseur (42) de manière commandée dans la deuxième position qui correspond à l'état opérationnel de séparation par le biais d'une pression régnant dans un accumulateur de pression (95) associé.

2. Dispositif de séparation (100) selon la revendication 1, avec lequel la vanne hydraulique (40) est réalisée sous la forme d'un curseur de débit volumique ou d'une vanne à piston.

3. Dispositif de séparation (100) selon l'une des revendications précédentes,
- avec lequel le boîtier (41) de la vanne hydraulique (40) possède une première ouverture principale (46-1) qui se trouve en amont et côté réservoir et une deuxième ouverture principale (46-2) qui se trouve en aval et côté frein, notamment pour la liaison hydraulique avec la conduite de frein (32) du système de freinage (30),
- avec lequel, dans la première position de l'élément curseur (42), la première et la deuxième ouverture principale (46-1, 46-2) du boîtier (41) sont reliées et couplées hydrauliquement et
- avec lequel, dans la deuxième position de l'élément curseur (42), la première et la deuxième ouverture principale (46-1, 46-2) du boîtier (41) sont séparées et découplées hydrauliquement.

4. Dispositif de séparation (100) selon l'une des revendications précédentes, avec lequel le boîtier (41) de la vanne hydraulique (40) possède une ouverture de commande (47) servant à la commande hydraulique de la position de l'élément curseur (42), notamment par le biais d'une liaison ou d'une séparation hydraulique - indirecte ou directe - avec ou de l'accumulateur de pression (95) associé, de préférence au moyen d'une conduite de commande (51-3).

5. Dispositif de séparation (100) selon la revendication 4, comprenant une première vanne de commande (50), laquelle est configurée pour la liaison et la séparation hydraulique commandée de l'ouverture de commande (47) de la vanne hydraulique (40) avec la portion (32-1), qui se trouve en amont et côté réservoir, de la conduite de frein (32), de préférence au moyen d'une conduite de dérivation (51), laquelle débouche notamment dans la portion (32-1), qui se trouve en amont et côté réservoir, de la conduite de frein (32) et est reliée ou peut être reliée hydrauliquement avec l'ouverture de commande (42) de la vanne hydraulique (40).

6. Dispositif de séparation (100) selon la revendication 4 ou 5, comprenant une deuxième vanne de commande (90), laquelle est configurée pour la liaison et la séparation hydrauliques commandées de l'ouverture de commande (47) de la vanne hydraulique (40) avec l'accumulateur de pression (95) associé, notamment au moyen d'une ou de la conduite de commande (51-3) et/ou au moyen d'une ou de la conduite de dérivation (51), laquelle débouche notamment dans la portion (32-1), qui se trouve en amont et côté réservoir, de la conduite de frein (32) et est reliée ou peut être reliée hydrauliquement avec l'ouverture de commande (42) de la vanne hydraulique (40).

7. Dispositif de séparation (100) selon la revendication 5 ou 6, avec lequel une vanne de commande (50, 90) respective est une vanne fermée à l'état normal, notamment une électrovanne fermée hors tension.

8. Dispositif de séparation (100) selon l'une des revendications précédentes, comprenant une unité d'interprétation et de commande (70), laquelle est configurée pour commander l'état du dispositif de blocage (100), notamment par le biais d'une commande de l'état de la première vanne de commande (50) et/ou de la deuxième vanne de commande (90) et/ou par le biais d'une détection et d'une interprétation de signaux d'un ou de plusieurs capteurs (55, 57, 59).

9. Dispositif de séparation (100) selon l'une des revendications précédentes, lequel possède une unité d'authentification (60) par le biais de laquelle un état opérationnel de séparation existant du dispositif de blocage (100), et notamment un blocage du système de freinage (30), ne peut être annulé qu'en utilisant un moyen d'autorisation, notamment en coopération avec une ou ladite unité d'interprétation et de commande (70).

10. Dispositif de séparation (100) selon la revendication 9, avec lequel l'unité d'authentification (60) et/ou le moyen d'authentification sont réalisés en association avec une unité WLAN, une unité Bluetooth, un moyen RFID, un moyen PIN, une protection par mot de passe, une protection par le biais de caractéristiques biométriques ou similaires, notamment en association avec une communication par ultrasons, infrarouges et/ou radioélectrique, de préférence au moyen d'un téléphone mobile.

11. Système de freinage hydraulique (30) pour un véhicule (1) pouvant être propulsé par la force musculaire et/ou la force d'un moteur, une bicyclette, un vélo électrique, un eBike ou un vélo à assistance électrique, comprenant :
- un réservoir (36) pour un liquide de frein (37),
- un frein (33),
- une conduite de frein (32) destinée à la liaison hydraulique du réservoir (36) avec le frein (33) et
- un dispositif de séparation (100) selon l'une des revendications 1 à 10, lequel est intégré dans la conduite de frein (32).

12. Véhicule (1) pouvant être propulsé par la force musculaire et/ou la force d'un moteur, et notamment bicyclette, vélo électrique, eBike ou vélo à assistance électrique, comprenant :
- au moins une roue (9-1, 9-2) et
- un système de freinage (30) selon la revendication 11 destiné à freiner et/ou à bloquer l'au moins une roue (9-1, 9-2).

13. Procédé pour faire fonctionner un système de freinage hydraulique (30), notamment pour un véhicule (1) pouvant être propulsé par la force musculaire et/ou la force d'un moteur, une bicyclette, un vélo électrique, un eBike ou un vélo à assistance électrique,
avec lequel :
- dans un état opérationnel de freinage normal, une portion (32-1), qui se trouve en amont et côté réservoir, d'une conduite de frein (32) du système de freinage (30) et une portion (32-2), qui se trouve en aval et côté frein, de la conduite de frein (32) du système de freinage (30) sont reliées hydrauliquement,
- dans un état opérationnel de séparation, la portion (32-1), qui se trouve en amont et côté réservoir, de la conduite de frein (32) et la portion (32-2), qui se trouve en aval et côté frein, de la conduite de frein (32) sont séparées hydrauliquement l'une de l'autre,
- dans une vanne hydraulique (40) comprenant un boîtier (41) et un élément curseur (42), en vue de la liaison et de la séparation hydrauliques commandées, l'élément curseur (42) est commandé pour coulisser dans le boîtier (41) entre une première position qui correspond à l'état opérationnel de freinage normal et une deuxième position qui correspond à l'état opérationnel de séparation,
**caractérisé en ce que**
- l'élément curseur (42) est commandé pour coulisser dans la deuxième position qui correspond à l'état opérationnel de séparation par le biais d'une pression régnant dans un accumulateur de pression (95) associé.
